# EUROPEAN PATENT APPLICATION

(11) **EP 1 130 538 A2**
(43) Date of publication of application: **05.09.2001**
(21) Application number: 01104534.1
(22) Date of filing: 02.03.2001
(51) Int. Cl.: G06K 15/02, G06K 15/12

(54) **An image data sending method and a print device for a print system**

(30) Priority: 03.03.2000 JP 2000058152
(71) Applicant: NEC CORPORATION, Tokyo (JP)
(72) Inventor: Ueki, Masaki, Kashiwazaki-shi, Niigata (JP)
(74) Representative: VOSSIUS & PARTNER

(57) **Abstract**

This print system comprises a characteristic storage section (24) to store the characteristic data peculiar to the engine, a CPU (25) to calculate, based on the characteristic data, the correction data for a certain clock counts after detection of the horizontal sync signal and the correction data for every time a certain time elapsed after that, a modulation data storage section (231) to receive and store the correction data, a quartz oscillator (22) to generate the basic clock, a timer (233) to monitor the time, a counter (234) to count the sync clock pulses, a modulation control section (232) which refers to the correction data upon receipt of the horizontal sync signal, determines the modulation timing according to the timer (233) or the counter (234) and provides modulation instruction to a clock generator for every modulation timing and the clock generator (235) to supply the sync clock obtained by modulation of the basic clock to the controller.

## Description

The present invention relates to an image data sending method and a print device for a print system and particularly relates to an image data sending method and a print device of a print system provided with a print control device which sends the image data synchronizing with the sync clock to a print device and a print device which execute print processing based on the above image data.

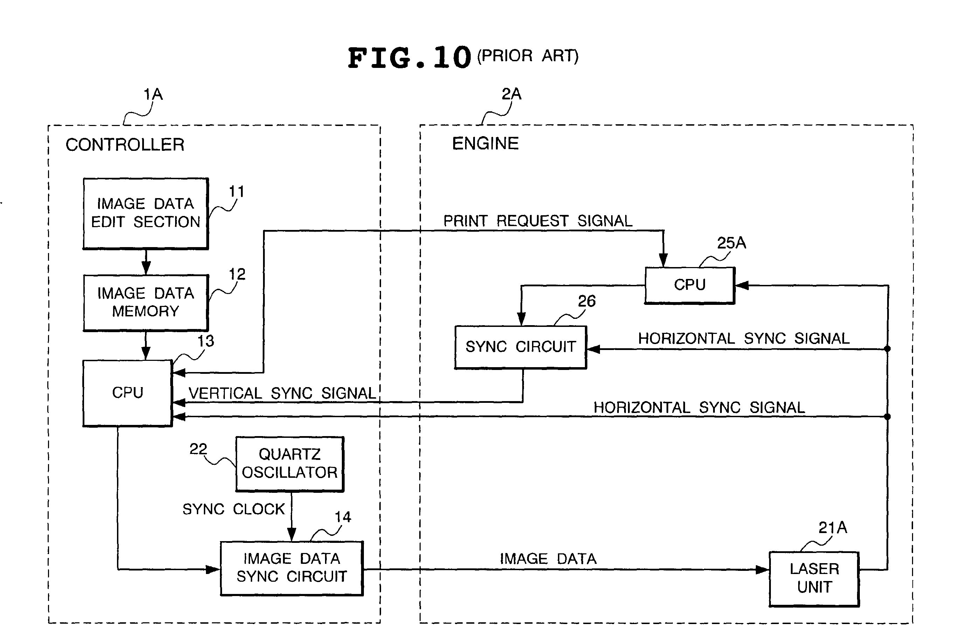

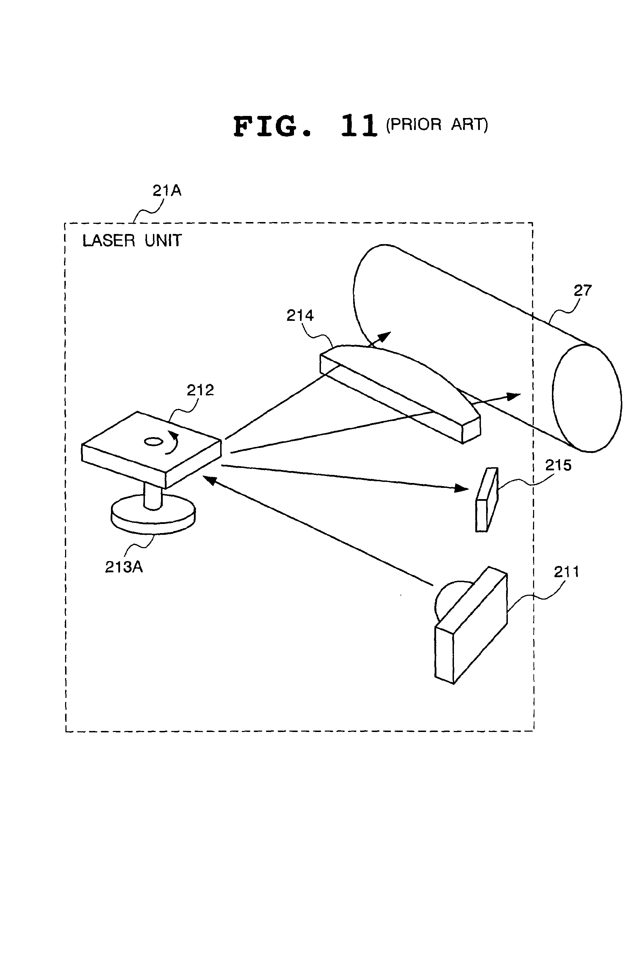

Figs. 10 and 11 show a conventional example of a print system provided with a print control device for generation and processing of image data or other print information and a print device for print processing based on the above image data.

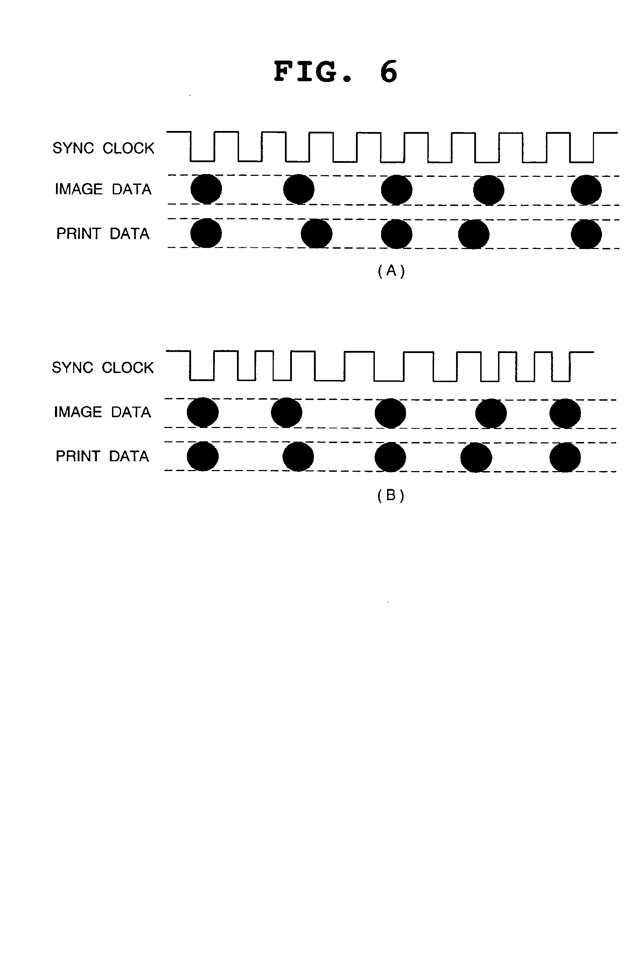

Fig. 10 is a block diagram illustrating the configuration of a conventional print system and the print system comprises a controller 1A, which is a print controller and an engine 2A, which is a print device. In this configuration, the print data (Code data, image data etc.) received from external devices such as a host computer is developed to the bit map data by an image data edit section 11 and stored to an image data memory 12. Then, a CPU 13 sends the print request signal to the engine 2A and, with reference to the horizontal sync signal and vertical sync signal supplied from the engine 2A, outputs the image data from an image data sync circuit 14 to the engine 2A synchronizing with a certain sync clock held by the controller 1A. At that time, the sync clock, which is the basic clock from a quartz oscillator 22 as it is, is sent to the image data sync circuit 14 and the image data sync circuit 14 generates the image data transfer signal for every two sync clock counts and sends the image data to the engine 2A for every two sync clock counts as shown in Fig. 6 (A), for example.

In the engine 2A, the image data from the image data sync circuit 14 is received by a laser unit 21A and then subject to print processing after processes by various sections of the engine 2A such as a photo-sensitive drum, a developing section, a transfer section, a fixing section, a cleaning section and a paper feeding section (not shown in Fig. 10).

Fig. 11 is a diagram showing the configuration of a laser unit in the conventional print system. In the figure, the laser beam projected from a laser 211 is reflected by a polygon mirror 212 rotated by a polygon motor 213A. The horizontal sync signal is obtained by an HSYNC sensor (Horizontal synchronization sensor) 215, and the image data projected through an f-theta lens 214 is applied to a photo-sensitive drum 27 so that an image is formed. Note that the f-theta lens 214 is an imaging lens which changes the isometric speed deviation to the constant velocity scanning on the photo-sensitive drum 27 so that the circular scanning light from the polygon mirror 212 focuses on a straight line on the photo-sensitive drum 27.

In the conventional print system as described above, the image data sent from the controller is printed without any processing after receiving by the engine. Further, the laser unit of the engine is provided with a polygon mirror and a lens so that the image data is formed to an image on the surface of the photo-sensitive drum with passing through these devices. Therefore, characteristics of the polygon mirror and lens with some precision errors or the like caused in manufacturing processes may lead to an inconstant laser beam velocity on the photo-sensitive drum, resulting in some shift in the image position formed on the photo-sensitive drum.

With referring to Fig. 6 (A), the image data sent from the controller has equal intervals of two sync clock counts, but the image on the photo-sensitive drum is shifted. For example, the image on the photo-sensitive drum corresponding to the second image data from the left is slightly shifted to the right when compared with the normal position on the same horizontal line on the photo-sensitive drum. This results from a higher speed of the laser beam at that section on the photo-sensitive drum caused by errors in the laser unit characteristics.

Thus, the conventional print system has a drawback that it cannot correct shifting of the image position caused by errors in characteristics of the laser unit or the engine.

An object of the present invention is to solve the above problem and to provide an image data sending method and a print device for a print system which does not cause image position shifting even when a different type of engine is used.

According to the first aspect of the invention, a print system having a print control device to send the image data in synchronization with the sync clock and a print device for print processing based on the image data sent from the print control device comprises
means to generate a sync clock for sending of the image data on the print device by modulation under the characteristic conditions peculiar to the print device, and
means to adjust the timing of the image data sending so as to correct the characteristic errors peculiar to the print device by supplying the generated sync clock to the print control device.

According to the second aspect of the invention, a print system having a print control device to send the image data in synchronization with the sync clock and a print device for print processing based on the image data sent from the print control device comprises
means to measure in advance and store the characteristic data peculiar to the print device which may affect the print intervals in the print processing,
means to calculate the correction data for every certain period of time based on the characteristic data,
means to generate the sync clock modulated by the correction data for every the certain period of time on the print device and supply the same to the print control device, and
means in the print control device to send the image data to the print device synchronizing with the sync clock supplied from the print device and thereby to adjust the image data to have equal print intervals with controlling the send timing of the image data for every the certain period of time.

In the preferred construction, the modulation is the frequency modulation which makes variable control of the frequency for every the certain period of time.

According to the third aspect of the invention, a print system having a print control device to send the image data in synchronization with the sync clock and a print device for print processing based on the image data sent from the print control device comprises
means to measure in advance and store the characteristic data peculiar to the print device which may affect the print start position of each line and print intervals in the print processing,
means to calculate, based on the characteristic data, first correction data for the predetermined sync clock counts immediately after detection of the horizontal sync signal and second correction data for every certain period of time after the first correction data,
means to generate the modulation sync clock corresponding to the predetermined sync clock counts by the first correction data and the modulation sync clock for every the certain period of time by the second correction data on the print device and supply the same to the print control device, and
means in the print control device to send the image data to the print device synchronizing with the modulation sync clock supplied from the print device and thereby to control the send timing of the image data for aligning the print start position of the lines in the image data and to adjust the print intervals of the image data equal.

In the preferred construction, the modulation is the frequency modulation which makes variable control of the frequency for every the certain clock counts and the certain period of time.

According to the fourth aspect of the invention, a print system having a print control device to send the image data in synchronization with the sync clock and a print device for print processing based on the image data sent from the print control device wherein
the print device comprises
an oscillator to output the basic clock,
a storage section to store the characteristic data of the device,
a CPU to set the modulation condition based on the characteristic data of the storage section, and
a modulation circuit which, upon instruction from the CPU for condition of the modulation, modulates the basic clock output from the oscillator and supplies the same as the sync clock to the print control device and
the print control device comprises
an image data sync circuit which sends the image data to the print device synchronizing with the sync clock supplied from the print device.

According to another aspect of the invention, a print system having a print control device to send the image data in synchronization with the sync clock and a print device for print processing based on the image data sent from the print control device wherein
the print device comprises
a characteristic storage section storing in advance the characteristic data peculiar to the print device which may affect the print start position of each line and print intervals in the print processing,
a CPU which, based on the characteristic data, calculates first correction data for the predetermined sync clock counts immediately after detection of the horizontal sync signal and second correction data for every certain period of time after the first correction data,
a modulation data storage section which receives and stores the first and second correction data calculated by the CPU,
an oscillator to output the basic clock,
a timer to monitor the elapse of the certain period of time,
a counter which counts the number of sync clock pulses sent from the clock generator,
a modulation control section which, upon receipt of the horizontal sync signal, refers to the first and second correction data from the modulation data storage section, determines the modulation timing according to the timer or the counter and specifies the modulation frequency to the clock generator for every timing of the modulation for modulation instruction, and
a clock generator which, upon receipt of modulation instruction from the modulation control section, modulates the basic clock sent from the oscillator and supplies the same as the sync clock to the image data sync circuit of the print control device and
the print control device comprises
an image data edit section which develops the print data received from external device into image data,
a memory to store the image data,
a control section which sends the print request signal to the print device and instructs the image data sync circuit to send the image data stored in the memory to the print device, and
an image data sync circuit which sends the image data to the print device synchronizing with the sync clock supplied from the print device.

According to another aspect of the invention, a print device in a print system having a print control device to send the image data to the print device in synchronization with the sync clock and the print device for print processing based on the image data sent from the print control device comprises
an oscillator to output the basic clock,
a storage section to store the characteristic data of the device,
a CPU to set the modulation condition based on the characteristic data in the storage section, and
a modulation circuit which, upon instruction from the CPU for condition of the modulation, modulates the basic clock output from the oscillator and supplies the same as the sync clock to the print control device.

According to another aspect of the invention, a print device in a print system having a print control device to send the image data to the print device in synchronization with the sync clock and the print device for print processing based on the image data sent from the print control device comprises
a characteristic storage section storing in advance the characteristic data peculiar to the print device which may affect the print start position of each line and print intervals in the print processing,
a CPU which, based on the characteristic data, calculates first correction data for the predetermined sync clock counts immediately after detection of the horizontal sync signal and second correction data for every certain period of time after the first correction data,
a modulation data storage section which receives and stores the first and second correction data calculated by the CPU,
an oscillator to output the basic clock,
a timer to monitor the elapse of the certain period of time,
a counter which counts the number of sync clock pulses sent from the clock generator,
a modulation control section which, upon receipt of the horizontal sync signal, refers to the first and second correction data from the modulation data storage section, determines the modulation timing according to the timer or the counter and specifies the modulation frequency to the clock generator for every timing of the modulation for modulation instruction, and
a clock generator which, upon receipt of modulation instruction from the modulation control section, modulates the basic clock sent from the oscillator and supplies the same as the sync clock to the print control device.

According to another aspect of the invention, an image data sending method used in a print system having a print control device to send the image data to a print device in synchronization with the sync clock and a print device for print processing based on the image data sent from the print control device wherein
the sync clock for sending of the image data is modulated by the characteristic condition peculiar to the print device and generated by the print device and, by supplying the sync clock to the print control device, the timing of the image data sending is corrected using errors in characteristics peculiar to the print device.
According to another aspect of the invention, an image data sending method used in a print system having a print control device to send the image data to a print device in synchronization with the sync clock and a print device for print processing based on the image data sent from the print control device wherein
characteristic data peculiar to the print device which may affect the print intervals in the print processing are measured in advance and stored, correction data for every certain period of time based on the characteristic data is calculated, sync clock modulated for every the certain period of time according to the correction data is generated by the print device and supplied to the print control device, and the print control device sends the image data to the print device synchronizing with the sync clock supplied from the print device and thereby controls the send timing of the image data for every the certain period of time so as to adjust the image data to have equal intervals.

In the preferred construction, the modulation is the frequency modulation which makes variable control of the frequency for every the certain period of time.

According to a further aspect of the invention, an image data sending method used in a print system having a print control device to send the image data to a print device in synchronization with the sync clock and a print device for print processing based on the image data sent from the print control device wherein
characteristic data peculiar to the print device which may affect the print start position of each line and print intervals in the print processing are measured in advance and stored and, based on the characteristic data, first correction data for the predetermined sync clock counts immediately after detection of the horizontal sync signal and second correction data for every certain period of time after the first correction data are calculated, the modulation sync clock corresponding to the predetermined sync clock counts according to the first correction data and the modulation sync clock for every the certain period of time according to the second correction data are generated by the print device and supplied to the print control device, and the print control device sends the image data to the print device synchronizing with the modulation sync clock supplied from the print device and thereby controls the send timing of the image data so as to align the print start position for each line of the image data and adjusts the image data to have equal print intervals.

In the preferred construction, the modulation is the frequency modulation which makes variable control of the frequency for every the certain clock counts or the certain period of time.

Other objects, features and advantages of the present invention will become clear from the detailed description given herebelow.

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing the configuration of a print system according to the present invention;
Fig. 2 is a diagram showing the configuration when the characteristic data are taken for the laser unit in the print system according to the present invention;
Fig. 3 is a block diagram showing an example of the configuration of the modulation section in the print system according to the present invention;
Fig. 4 is a time chart of the signals during characteristic data measurement of Fig. 2;
Fig. 5 is a time chart of the signals related to the first face of the polygon mirror during characteristic data measurement of Fig. 2;
Fig. 6 is a diagram showing the relation between the image data output using sync clock and the image position on the photo-sensitive drum;
Fig. 7 is a diagram showing the relation between the image data output using the modulation clock and the image position on the photo-sensitive drum;
Fig. 8 is a diagram showing the relation between the image data output using the modulation clock and the print start position for each face of the mirror;
Fig. 9 is a block diagram showing the configuration when a single engine is provided with several laser units;
Fig. 10 is a block diagram showing the configuration of a conventional print system; and
Fig. 11 is a diagram showing the configuration of a laser unit in a conventional print system.

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

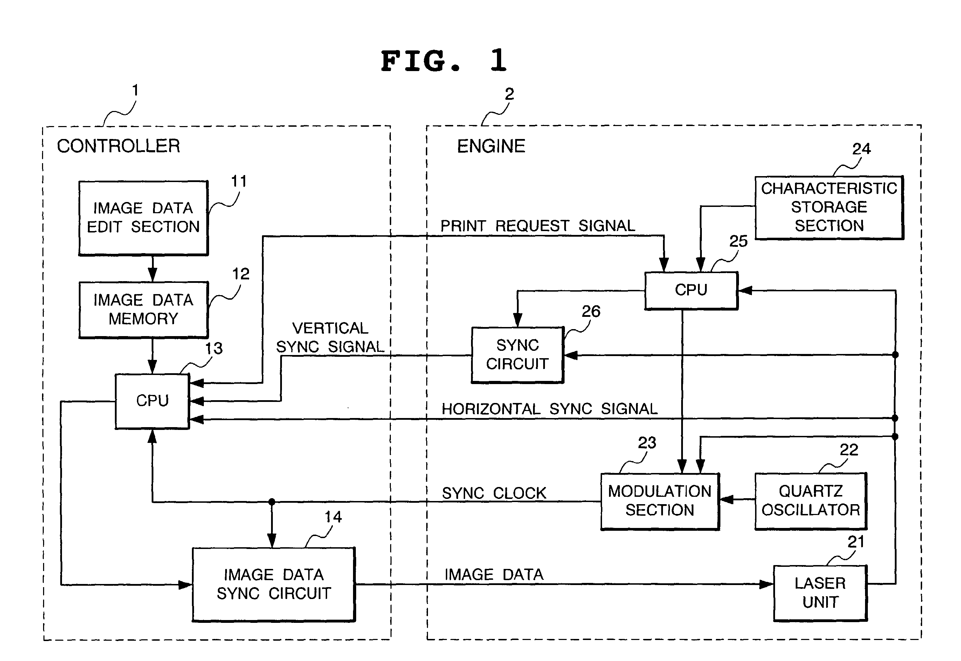

Fig. 1 is a block diagram showing the configuration of a print system according to the present invention, which comprises a controller 1 as a print control device and an engine 2 as a print device. An image data edit section 11, an image data memory 12, a CPU 13, an image data sync circuit 14 of the controller 1 and a sync circuit 26 of the engine 2 are the same as those in the description about the prior art referring to Fig. 11, and explanation about them is omitted here to avoid redundancy.

Referring to Fig. 1, the engine 2 in the present invention comprises a quartz oscillator 22 to supply the basic clock to a modulation section 23, the modulation section 23 to output the sync clock for image data output, a characteristic storage section 24 to store the characteristic data of a laser unit 21 mounted to the engine 2, and a CPU 25 to which the characteristic data for modulation is input from the characteristic storage section 24 and which sets the modulation conditions to the modulation section 23. Thus, the system is configured so that the timing for image data sending from the controller 1 to the engine 2 is determined by the sync clock modulated and generated by the engine 2.

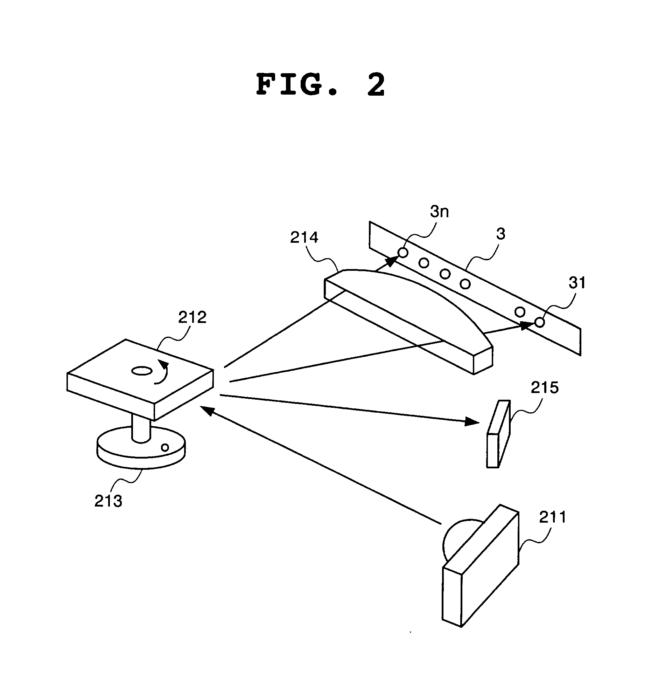

Fig. 2 is a diagram showing the configuration for measuring the characteristic data of the laser unit in the print system according to the present invention. A laser 211, a polygon mirror 212, an f-theta lens 214 and an HSYNC sensor (Horizontal sync) 215 are the same as those in the description about the prior art referring to Fig. 11 and explanation about them is omitted here to avoid redundancy.

Referring to Fig. 2, a polygon motor with axis position sensor 213 is a conventional polygon motor 213A of Fig. 11 having an axis position sensor added. With this axis position sensor, the polygon motor with axis position sensor 213 detects the faces of the polygon mirror 212 and outputs the axis position sensor signal to the modulation section 23. In addition, a sensor plate 3 is placed at the position of the photo-sensitive drum 27. The sensor plate 3 is provided with n pieces of optical sensors 31 to 3n with equal intervals. The sensor plate 3 is used for advance measurement of the characteristic data only. The optical sensor 31 is positioned corresponding to the print start position on the photo-sensitive drum and the optical sensor 3n corresponding to the print end position.

Next, referring to Figs. 1 to 9, the operation in an embodiment of the present invention will be described in details below.

Firstly, acquisition of the characteristic data of the laser unit 21 to modulate the sync clock at the modulation section 23 of Fig. 1 is described. Referring to Fig. 2, the sensor plate 3 is provided with n pieces of optical sensors (31 to 3n) with equal intervals. In addition, the polygon motor with axis position sensor 213 is provided with a sensor which can detect the axis position. The signal obtained from measurement in Fig. 2 is described here. Note that, in the characteristic data measurement for the laser unit 21 here, the modulation section 23 does not execute any modulation because the characteristic storage section 24 of Fig. 1 does not have any characteristic data yet, and the sync clock without modulation as in conventional systems is supplied to the image data sync circuit 14.

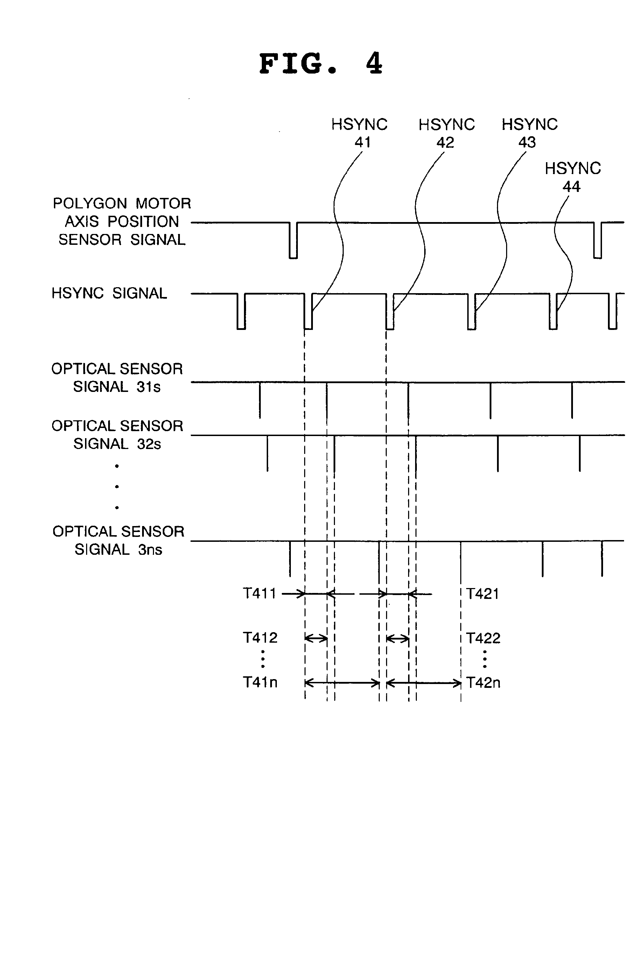

Fig. 4 is a time chart of signals for characteristic data measurement of Fig. 2. Using the axis position sensor of the polygon motor with axis position sensor 213, it is possible to detect which one of the four faces of the polygon mirror 212 (supposed to have four faces in this description) has reflected a certain image data. The optical sensor signals 31S to 3nS are output signals of the optical sensors 31 to 3n respectively. Supposing that the first HSYNC signal (horizontal sync signal) HSYNC 41 after the polygon motor axis position sensor signal is the signal from the first face of the polygon mirror, T411, T412, ..., T41n can be measured with reference to this HSYNC 41.

Here, T411 is the time elapsed after the HSYNC 41 as the HSYNC signal is detected by the HSYNC sensor 215 until the optical sensor 31 detects the laser beam and outputs the optical sensor signal 31S. T412 is the time from the detection of HSYNC 41 to the output of the optical sensor signal 32S by the optical sensor 32. Similarly, the second HSYNC signal (horizontal sync signal) HSYNC 42 after the polygon motor axis position sensor signal is supposed to be the signal of the second face of the polygon mirror. T421 shows the time after detection of HSYNC 42 until output of the optical sensor signal 31S by the optical sensor 31. T431 to T43n and T441 to T44n are also measured corresponding to HSYNC 43 (signal of the third face of the polygon mirror) and HSYNC 44 (signal of the fourth face of the polygon mirror). These measurement values are stored in the characteristic storage section 24 and used for sync clock modulation by the modulation section 23 later.

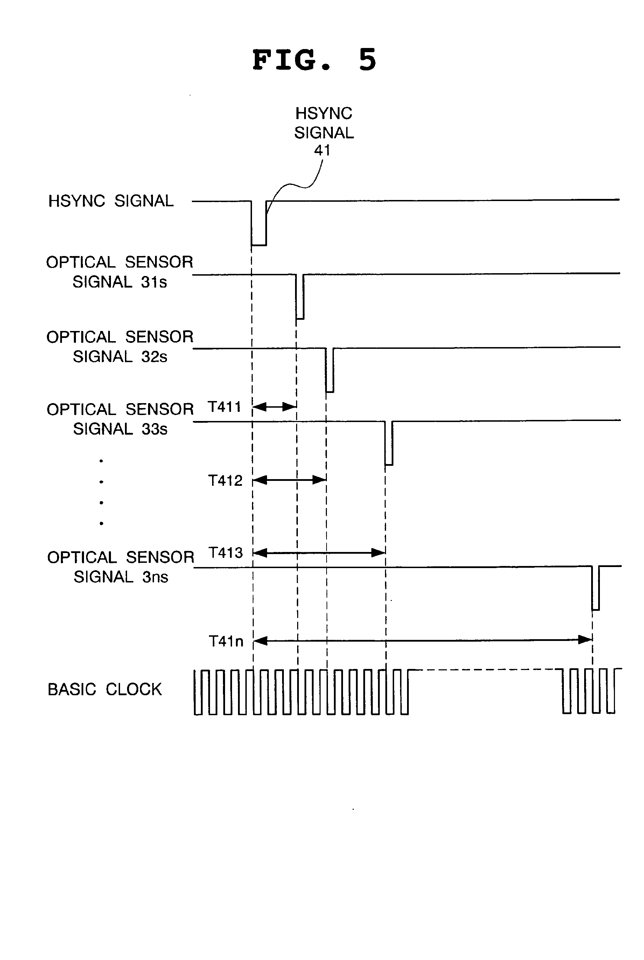

Fig. 5 is a time chart of the signals related to the first face of the polygon mirror during characteristic data measurement of Fig. 2. Among four faces of the polygon mirror measured in Fig. 4, the first face is described in details. Each of the times T411 to T41n is counted and measured by the basic clock.

Examining here the characteristics of the first face mirror. The optical sensor signals 31S to 3nS as the output signals from the optical sensors 31 to 3n laid out with equal intervals should be separated by equal intervals. Specifically, it is ideal to have (T412 - T411) = (T413 - T412) = ... = (T41n - T41(n-1)). In the reality, however, manufacturing errors or the like in the polygon mirror 212 and the f-theta lens 214 result in that (T412 - T411) is not equal to (T413 - T412) as shown in Fig. 5.

If the image data is output with equal intervals under such situation, as in Fig. 6(A) showing the relation between the image data output by the sync clock without modulation and the image position on the photo-sensitive drum, the position of the print data (image to be printed on the photo-sensitive drum) is shifted in the print result. Thus, the basic clock is modulated on the engine 2 corresponding to the characteristic of the engine 2 to generate the sync clock so that the controller 1 outputs the image data in synchronization with this modulation clock which controls the output timing of the image data. By doing so, the system can achieve the print result with equal intervals free from any print position shifting as shown in Fig. 6 (B), which is a diagram showing the relation between the image data output using the modulated sync clock and the image position on the photo-sensitive drum. Note that, in Fig. 6, the axis of abscissa indicates the time for the sync clock and the image data but the axis of abscissa indicates the distance for the print data (printed image on the photo-sensitive drum).

Then, referring to Fig. 5, the basic clock and the modulation clock (modulated sync clock) will be described specifically. As described above, suppose that the optical sensor 31 and the optical sensor 32 are separated by the same distance as that between the optical sensor 32 and the optical sensor 33, and that such distance corresponds to three clock counts of theoretical basic clock. Further suppose that, according to the results of actual measurement by Fig. 2, the optical sensor 31 and the optical sensor 32 are separated by two clock counts and the optical sensor 32 and the optical sensor 33 are separated by four clock counts. This means that, from manufacturing errors or the like of the polygon mirror 212, the f-theta lens 214 etc., the laser beam speed is 3/2 times the reference between the optical sensor 31 and the optical sensor 32 and the laser beam speed is 3/4 times the reference between the optical sensor 32 and the optical sensor 33. If they are kept as they are, even when the controller 1 sends the image data to the engine 2 with the same time intervals, the actually printed image will be shifted.

Supposing that the basic clock is f(Hz), these clocks can be modulated by f÷2×3 (Hz) and f÷4×3 (Hz) respectively. In practice, the HSYNC signal 41 is used as the reference and the time until T411 is not subject to modulation. The clock is modulated to (3/2) f (Hz) for the time from T411 to T412 and to (3/4) f (Hz) for the time from T412 to T413. Similar modulation is executed up to T41n so that the print result for one line can be provided with equal intervals. In the same way, the data for the second face, the third face and the fourth face of the polygon mirror are modulated.

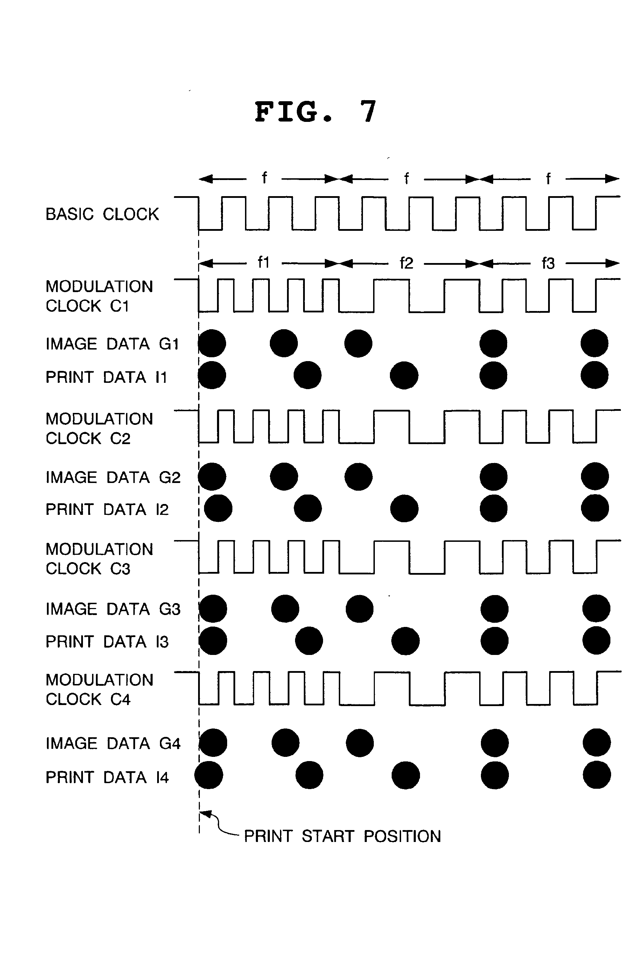

Depending on the characteristics of the faces on the polygon mirror 212, T411, T421, T431 and T441 in the above description for Fig. 4 may be different. In the event of such case, as shown in Fig. 7, which shows the relation between the image data output using the modulation clock and the image position on the photo-sensitive drum, the image writing start position (print start position) differs among lines and the print result has a serrate edge. To correct such edge, modulation is now made among T411, T421, T431 and T441. Note that, however, this method can be used only when the controller 1 sets the print start position by the count of sync clock from the HSYNC signal. The method of modulation is the same as that for modulation of a certain time period described above.

Fig. 7 is a time chart when the modulation clock is output for each face of the polygon mirror 212 so that all of (T412 - T411), (T413 - T412), .. (T41n - T41(n-1)), (T422 - T421), (T423 - T422), ..., (T42n - T42 (n-1)), (T432 - T431), (T433 - T432) ..., (T43n - T43 (n-1)), (T442 - T441), (T443 - T442), ..., (T44n - (T44 (n-1)) in Fig. 4 have the same time interval.

Here, the modulation condition (modulation frequency) is set, as in the description about Fig. 5 above, using the time corresponding to three basic clock counts as the reference interval for the optical sensors 31 to 3n as a unit. The frequency f (Hz) of the basic clock is, for the modulation clock C1 corresponding to the first face mirror, modulated to the frequency f1 (Hz) calculated by the ratio between the measured basic clock counts for (T412 - T411) and three basic clock counts. Similarly, the basic clock frequency f (Hz) is modulated to the frequency f2 (Hz) corresponding to (T413 - T412) and to the frequency f3 (Hz) corresponding to (T414 - T413). In Fig. 7, the modulation clocks C1 to C4 are shown as the same clock pulse, but the characteristics of each face on the mirror may be different in the reality. In such case, the modulation is made similarly using the modulation clock C2 for the second face mirror, the modulation clock C3 for the third face mirror and the modulation clock C4 for the fourth face mirror.

By thus modulating the sync clock, the image position shifting can be prevented for the second and subsequent image data for each of the lines corresponding to each of the faces on the mirror. However, the print position of the first image data for each mirror or the actual print start position of each line may be serrate when compared with the normal print start position as in Fig. 7 depending on the characteristics of the faces on the polygon mirror 212.

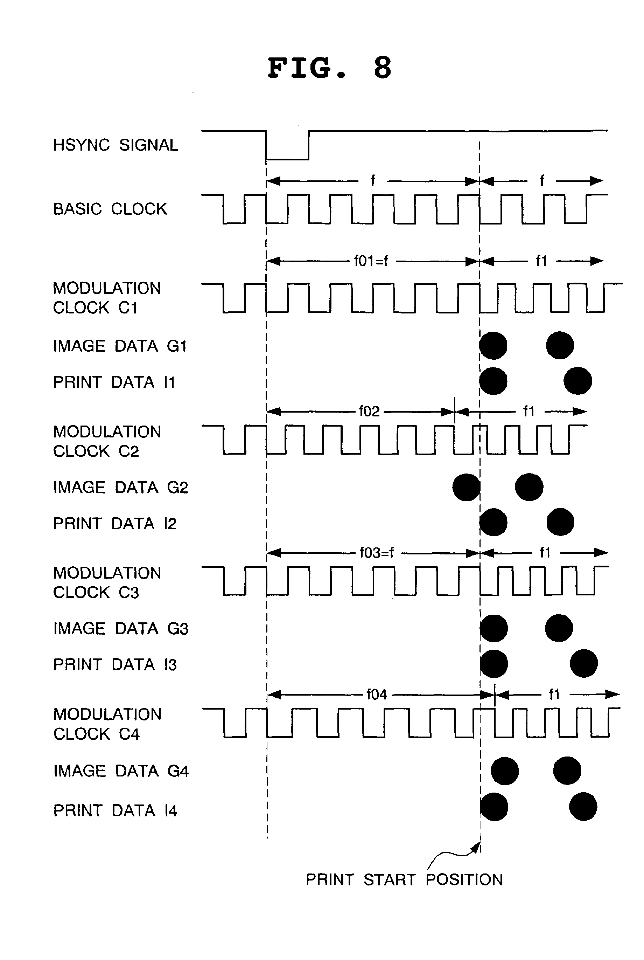

Fig. 8 is a diagram showing the relation between the image data output using the modulation clock and the print start position for each face of the mirror indicates the result after arranging the serrate edge straightly using the modulation clock. The print start position can be made straight by changing, with reference to the fall of the HSYNC signal, the clock until the print start position. Specifically, the frequency of the modulation clock C1 for the first face mirror is changed to f01 (Hz), the frequency of the modulation clock C2 for the second face mirror to f02 (Hz) and the frequency of the modulation clock C3 for the third face mirror to f03 (Hz) and the frequency of the modulation clock C4 for the fourth face mirror to f04 (Hz). The modulation frequency can be determined in the same way as that for modulation of f (Hz) to f1 (Hz) or the like as described above.

In other words, in Fig. 2, the time from the fall of the HSYNC signal to the optical sensor 31 (print start position) is measured for the faces of the polygon mirror 212 and, these times are compared with the reference time (described as the time corresponding to five basic clock counts here). The modulation time is the period from the fall of the HSYNC signal to the clock counts set by the controller 1 (for example, until five basic clock counts here). Therefore, f01, f02, f03 or f04 corresponding to the faces for which the measured times are the same as the reference time is equal to the basic clock f. In Fig. 8, f01 and f03 are such cases, for example. Note that this method is effective for a system in which the controller 1 counts (for five clock counts here) the sync clock (modulation clock ) with reference to the HSYNC signal so as to set the print start position.

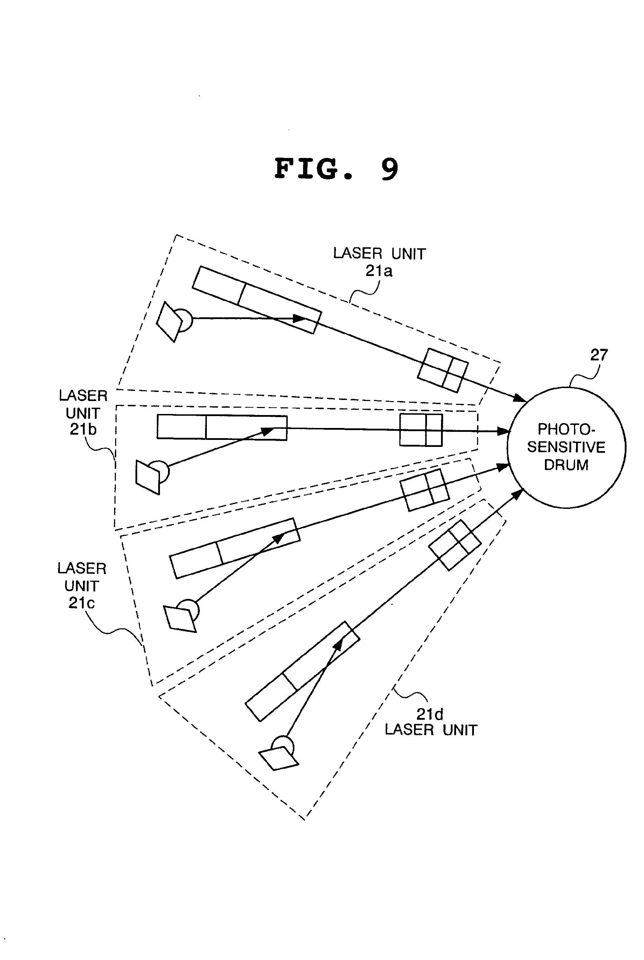

Fig. 9 is a block diagram showing the configuration when a single engine is provided with several laser units. This is an example of a print device having four laser units 21a, 21b, 21c and 21d placed side by side. Also in this case, similarly to the configuration with a single laser unit, a system to output the modulation clock corresponding to each f-theta lens and each polygon mirror on the engine 1 achieves a better image quality of the print results.

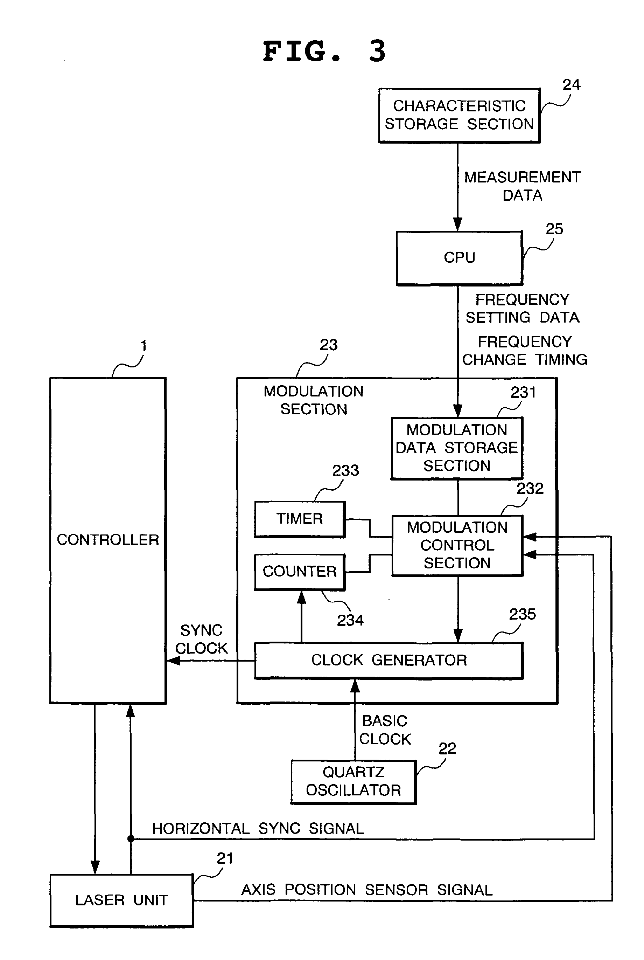

Next, the modulation operation is described in details with referring to Fig. 3. Fig. 3 is a block diagram showing an example of the configuration for the modulation section in the print system according to the present invention. The modulation section 23 comprises a modulation data storage section 231 which receives and stores the frequency setting data and the frequency change timing set by the CPU 25, a modulation control section 232 which instructs modulation to a clock generator 235, a timer 233, a counter 234 which counts the number of sync clock pulses sent from the clock generator 235 and the clock generator 235 which modulates the basic clock sent from the quartz oscillator 22 and supplies it as the sync clock to the controller 1.

First of all, the characteristic data of the laser unit 21 in Fig. 2 above including, for example, the measured basic clock counts from the horizontal sync signal to the print start position, measured basic clock counts for the intervals between optical sensors corresponding to the faces of the polygon mirror 212, sync clock counts from the horizontal sync signal to the print start position, first reference basic clock counts and the second reference basic clock counts between the optical sensors are stored to the characteristic storage section 24. Here, the sync clock counts from the horizontal sync signal to the print start position corresponds to the sync clock counts from the receipt of the horizontal sync signal by the controller 1 to the sending of the first image data.

The CPU 25 calculates, based on the data stored in the characteristic storage section 24, the modulation frequency for the sync clock counts from the horizontal sync signal to the print start position and the modulation frequency for every period corresponding to the second reference basic clock counts and, sends the correction data associating them with the frequency change timings to the modulation data storage section 231 as the modulation data. This processing by the CPU 25 is made only once when the engine 2 is powered on (before printing) and the modulation processing for printing is made using the modulation data (correction data) stored in the modulation data storage section 231.

The modulation control section 232 synchronizes with the first face of the polygon mirror 212 using the axis position sensor signal from the laser unit 21 and, referring to the horizontal sync signal and the modulation data, outputs f01 (Hz) shown in Fig. 8 and, synchronizing with the second face, outputs f02 (Hz) and similarly outputs f03 (Hz) and f04 (Hz) to the clock generator 235. Further, following each of f01 (Hz) to f04 (Hz) shown in Fig. 8, f1 (Hz), f2 (Hz), f3 (Hz) ...as shown in Fig. 7 are output to the clock generator 235.

In this procedure, the timing of the frequency change instruction from the modulation control section 232 to the clock generator 235 is determined with referring to the counter 234 or the timer 233. Specifically, immediately after receiving the horizontal sync signal, the sync clock from the horizontal sync signal to the print start position (five clock counts in Fig. 8) is modulated to f01 (Hz) as shown in Fig. 8. These five clock counts are counted by the counter 234. After that, the timer 233 monitors the time corresponding to the second reference basic clock counts as shown in Fig. 7 (three locks in Fig. 7) and modulates the modulation clock (sync clock) from f1 (Hz) --> f2 (Hz) --> f3 (Hz) in Fig. 7 for every elapse of such time.

The clock generator 235 outputs, based on the basic clock output from the quartz oscillator 22, the clock modulated using the modulation frequency specified by the modulation control section 232 as the sync clock to the controller 1.

The controller 1 is triggered by the horizontal sync signal (HSYNC signal) output from the laser unit 21 and counts the modulated sync clock and outputs the image data in synchronization with the sync clock.

In the above description, the CPU 25 calculates and sets the modulation data (correction data) based on the data stored in the characteristic storage section 24 when the power is turned on. This can be designed differently. Specifically, the characteristic storage section 24 can be deleted from Fig. 3 and the separately calculated modulation data (correction data) can be stored directly to the modulation data storage section 231. In this case, it is necessary to use a non-volatile memory for the modulation data storage section 231.

Though the characteristics in this embodiment are mainly the characteristics of the laser unit, correction data for other characteristics peculiar to the engine can be applied.

As described above, the present invention enables supply of the modulation clock to correct errors in characteristics peculiar to the engine as the sync clock from the engine to the controller. This enables the engine itself to correct the characteristic errors peculiar to the individual engine. This has an effect that a print system free from image position shifting even for different engine types can be provided.

Although the invention has been illustrated and described with respect to exemplary embodiment thereof, it should be understood by those skilled in the art that the foregoing and various other changes, omissions and additions may be made therein and thereto, without departing from the spirit and scope of the present invention.

## Claims

1. A print system having a print control device (1) to send the image data in synchronization with the sync clock and a print device (2) for print processing based on said image data sent from said print control device (1) comprising:
means (22) for generating a sync clock for sending of said image data on said print device (2) by modulation under the characteristic conditions peculiar to said print device (2); and
means (25) for adjusting the timing of said image data sending so as to correct the characteristic errors peculiar to said print device (2) by supplying the generated sync clock to said print control device (1).

2. A print system having a print control device (1) to send the image data in synchronization with the sync clock and a print device (2) for print processing based on said image data sent from said print control device (1) comprising:
means (21) for measuring in advance and store the characteristic data peculiar to said print device (2) which may affect the print intervals in said print processing;
means (25) for calculating the correction data for every certain period of time based on said characteristic data;
means (22) for generating the sync clock modulated by said correction data for every said certain period of time on said print device (2) and supply the same to said print control device (1); and
means (14) in said print control device (1) for sending said image data to said print device (2) synchronizing with the sync clock supplied from said print device (2) and thereby adjusting said image data to have equal print intervals with controlling the send timing of said image data for every said certain period of time.

3. A print system as set forth in Claim 2 wherein
said modulation is the frequency modulation which makes variable control of the frequency for every said certain period of time.

4. A print system having a print control device (1) to send the image data in synchronization with the sync clock and a print device (2) for print processing based on said image data sent from said print control device (1) comprising:
means (21) for measuring in advance and store the characteristic data peculiar to said print device (2) which may affect the print start position of each line and print intervals in said print processing;
means (25) for calculating, based on said characteristic data, first correction data for the predetermined sync clock counts immediately after detection of the horizontal sync signal and second correction data for every certain period of time after the first correction data;
means (23) for generating the modulation sync clock corresponding to said predetermined sync clock counts by said first correction data and the modulation sync clock for every said certain period of time by said second correction data on said print device (2) and supplying the same to said print control device (1); and
means (14) in said print control device (1) for sending said image data to said print device (2) synchronizing with said modulation sync clock supplied from said print device (2) and thereby controlling the send timing of said image data for aligning the print start position of the lines in said image data and to adjust the print intervals of said image data equal.

5. A print system as set forth in Claim 4 wherein
said modulation is the frequency modulation which makes variable control of the frequency for every said certain clock counts and said certain period of time.

6. A print system having a print control device (1) to send the image data in synchronization with the sync clock and a print device (2) for print processing based on said image data sent from said print control device (1) wherein
said print device (2) comprising:
an oscillator (22) to output the basic clock;
a storage section (24) to store the characteristic data of the device;
a CPU (25) to set the modulation condition based on the characteristic data of said storage section; and
a modulation circuit (23) which, upon instruction from said CPU (25) for condition of said modulation, modulates the basic clock output from said oscillator (22) and supplies the same as said sync clock to said print control device (1) and
said print control device (1) comprising:
an image data sync circuit (14) which sends said image data to said print device (2) synchronizing with the sync clock supplied from said print device (2).

7. A print system having a print control device (1) to send the image data in synchronization with the sync clock and a print device (1) for print processing based on said image data sent from said print control device (1) wherein
said print device (2) comprising:
a characteristic storage section (24) storing in advance the characteristic data peculiar to said print device which may affect the print start position of each line and print intervals in said print processing;
a CPU (25) which, based on said characteristic data, calculates first correction data for the predetermined sync clock counts immediately after detection of the horizontal sync signal and second correction data for every certain period of time after the first correction data;
a modulation data storage section (231) which receives and stores the first and second correction data calculated by said CPU (25);
an oscillator (22) to output the basic clock;
a timer (233) to monitor the elapse of said certain period of time;
a counter (234) which counts the number of sync clock pulses sent from a clock generator;
a modulation control section (232) which, upon receipt of the horizontal sync signal, refers to said first and second correction data from said modulation data storage section (231), determines the modulation timing according to said timer (233) or said counter (234) and specifies the modulation frequency to the clock generator for every timing of said modulation for modulation instruction; and
a clock generator (235) which, upon receipt of modulation instruction from said modulation control section (232), modulates the basic clock sent from said oscillator (22) and supplies the same as the sync clock to the image data sync circuit of said print control device (1) and
said print control device (1) comprising:
an image data edit section (11) which develops the print data received from external device into image data;
a memory (12) to store said image data;
a control section (13) which sends the print request signal to said print device (2) and instructs a image data sync circuit to send said image data stored in said memory to said print device (2); and
an image data sync circuit (14) which sends said image data to said print device (2) synchronizing with the sync clock supplied from said print device (2).

8. A print device in a print system having a print control device (1) to send the image data to the print device (2) in synchronization with the sync clock and the print device (2) for print processing based on said image data sent from said print control device (1) comprising:
an oscillator (22) to output the basic clock;
a storage section (24) to store the characteristic data of the device;
a CPU (25) to set the modulation condition based on the characteristic data in said storage section; and
a modulation circuit (23) which, upon instruction from said CPU (25) for condition of said modulation, modulates the basic clock output from said oscillator (22) and supplies the same as said sync clock to said print control device (1).

9. A print device in a print system having a print control device (1) to send the image data to the print device in synchronization with the sync clock and the print device for print processing based on said image data sent from said print control device (1) comprising:
a characteristic storage section (24) storing in advance the characteristic data peculiar to said print device which may affect the print start position of each line and print intervals in said print processing;
a CPU (25) which, based on said characteristic data, calculates first correction data for the predetermined sync clock counts immediately after detection of the horizontal sync signal and second correction data for every certain period of time after the first correction data;
a modulation data storage section (231) which receives and stores the first and second correction data calculated by said CPU;
an oscillator (22) to output the basic clock;
a timer (233) to monitor the elapse of said certain period of time;
a counter (234) which counts the number of sync clock pulses sent from a clock generator;
a modulation control section (232) which, upon receipt of the horizontal sync signal, refers to said first and second correction data from said modulation data storage section (231), determines the modulation timing according to said timer (233) or said counter (234) and specifies the modulation frequency to a clock generator for every timing of said modulation for modulation instruction; and
a clock generator (235) which, upon receipt of modulation instruction from said modulation control section (232), modulates the basic clock sent from said oscillator (22) and supplies the same as the sync clock to said print control device (1).

10. An image data sending method used in a print system having a print control device to send the image data to a print device in synchronization with the sync clock and a print device for print processing based on said image data sent from said print control device wherein
the sync clock for sending of said image data is modulated by the characteristic condition peculiar to said print device and generated by said print device and, by supplying the sync clock to said print control device, the timing of said image data sending is corrected using errors in characteristics peculiar to said print device.

11. An image data sending method used in a print system having a print control device to send the image data to a print device in synchronization with the sync clock and a print device for print processing based on said image data sent from said print control device wherein
characteristic data peculiar to said print device which may affect the print intervals in said print processing are measured in advance and stored,
correction data for every certain period of time based on said characteristic data is calculated, sync clock modulated for every said certain period of time according to said correction data is generated by said print device and supplied to said print control device, and said print control device sends said image data to said print device synchronizing with the sync clock supplied from said print device and thereby controls the send timing of said image data for every said certain period of time so as to adjust said image data to have equal intervals.

12. An image data sending method used in a print system as set forth in Claim 11 wherein
said modulation is the frequency modulation which makes variable control of the frequency for every said certain period of time.

13. An image data sending method used in a print system having a print control device to send the image data to a print device in synchronization with the sync clock and a print device for print processing based on said image data sent from said print control device wherein
characteristic data peculiar to said print device which may affect the print start position of each line and print intervals in said print processing are measured in advance and stored and, based on said characteristic data, first correction data for the predetermined sync clock counts immediately after detection of the horizontal sync signal and second correction data for every certain period of time after the first correction data are calculated, the modulation sync clock corresponding to said predetermined sync clock counts according to said first correction data and the modulation sync clock for every said certain period of time according to said second correction data are generated by said print device and supplied to said print control device, and said print control device sends said image data to said print device synchronizing with said modulation sync clock supplied from said print device and thereby controls the send timing of said image data so as to align the print start position for each line of said image data and adjusts said image data to have equal print intervals.

14. An image data sending method in a print system as set forth in Claim 13 wherein
said modulation is the frequency modulation which makes variable control of the frequency for every said certain clock counts or said certain period of time.
